# EUROPÄISCHE PATENTSCHRIFT

(11) **EP 2 428 298 B1**
(45) Veröffentlichungstag und Bekanntmachung des Hinweises auf die Patenterteilung: **30.09.2015**
(21) Anmeldenummer: 11179759.3
(22) Anmeldetag: 01.09.2011
(51) Int. Cl.: B23B 31/02, B23B 31/20

(54) **Werkzeugaufnahme zum Einsatz in einer Werkzeugmaschine und Verfahren zum Betreiben einer solchen Werkzeugaufnahme**
Tool holder for use in a machine tool and method for operating such a tool holder
Porte outil pour l'installation dans une machine-outil et procédé de fonctionnement d'une tel porte outil

(30) Priorität: 10.09.2010 DE 102010037453; 28.09.2010 DE 102010037822
(43) Veröffentlichungstag der Anmeldung: 14.03.2012
(73) Patentinhaber: EMUGE-Werk Richard Glimpel GmbH & Co.KG Fabrik für Präzisionswerkzeuge, 91207 Lauf a.d. Pegnitz (DE)
(72) Erfinder: Liebald, Peter, 91161 Hilpoltstein (DE)
(74) Vertreter: Schröer, Gernot H.

(56) Entgegenhaltungen:
- EP-A1- 1 561 539
- US-A- 4 640 652

## Beschreibung

Die Erfindung betrifft eine Werkzeugaufnahme gemäß dem Oberbegriff des Anspruchs 1, zur Aufnahme eines Werkzeugs und zur Drehkopplung des Werkzeugs an eine Werkzeugmaschine, wobei die Werkzeugaufnahme eine Leitung zum Hindurchführen eines Kühl- und/oder Schmiermittels von einer Kühl- und/oder Schmiermittelquelle zum Werkzeug aufweist, wobei das Werkzeug einen Leitungsabschnitt zum Führen des Kühl- und/oder Schmiermittels an eine Bearbeitungsstelle aufweist und wobei im in die Werkzeugaufnahme montierten Zustand des Werkzeugs die Leitung der Werkzeugaufnahme an einer Kopplungsstelle den Leitungsabschnitt des Werkzeugs kontaktiert, so dass Kühl- und/oder Schmiermittel von der Leitung der Werkzeugaufnahme in den Leitungsabschnitt des Werkzeugs strömt oder strömen kann. Des Weiteren betrifft die Erfindung ein Verfahren zum Betreiben einer solchen Werkzeugaufnahme.

Eine Beispielhafte Werkzeugaufnahme und Verfahren sind aus der EP 1 561 539 A1 bekannt.

Eine Werkzeugaufnahme dieser Art ist aus der DE 296 24 433 U1 bekannt. Hier wird eine Spindelvorrichtung für eine Werkzeugmaschine beschrieben, bei der zwei Zufuhrpfadsysteme zum getrennten Einleiten von Luft und Flüssigkeit in eine Spindel vorgesehen sind. Weiterhin ist eine Nebelerzeugungseinrichtung vorgesehen, die durch diese Zufuhrpfadsysteme zugeführte Luft und Flüssigkeit mischt und eine nebelförmige Mischung ausstößt, um das Werkzeug an seiner Bearbeitungsstelle zu schmieren bzw. zu kühlen.

Es hat sich bei einer solchen sogenannten Minimalmengenschmierung bewährt, zum Kühlen bzw. Schmieren des Werkzeugs besagten Ölnebel einzusetzen, um eine effektive Bearbeitung durch das Werkzeug bei hinreichenden Standzeiten zu gewährleisten.

Bei einer Konstruktion der eingangs genannten Art wird die Leitung an den Leitungsabschnitt axial anstoßend angesetzt, um auch bei auswechselbarem Werkzeug die Kühl- und/oder Schmierstoffversorgung der Bearbeitungsstelle mit Ölnebel bewerkstelligen zu können. Es wurde dabei als nachteilig erkannt, dass im Falle von Undichtigkeiten an der Kopplungsstelle zwischen Leitung und Leitungsabschnitt eine Entmischung des Ölnebels stattfinden kann, d. h. Öl kann sich aus dem Ölnebel abscheiden und zu Verunreinigungen der Werkzeugaufnahme führen. Im selben Maße wird in diesem Falle natürlich das Kühlschmiermittel um Öl reduziert, was entsprechende negative Auswirkungen auf den Zerspanprozess hat.

Aus DE 198 21 186 C1 ist ein Gewindeschneidfutter für einen Gewindebohrer mit Minimalmengenschmierung bekannt, welches einen achszentralen Schmiermittelkanal mit einem axial verschieblichen Kühlmittelrohr für ein Schmiermittel-Aerosol und eine maschinenseitige Minimalmengenschmierquelle, von der das Schmiermittel-Aerosol zur Längsbohrung des Gewindebohrers geführt wird, aufweist. Das Kühlmittelrohr wird durch den auf seine inneren Stirnflächen einwirkenden Druck des Aerosols unabhängig von der Axialpositon des Gewindebohrers in seine Eingriffsstellung an die Längsbohrung des Gewindebohrers gedrückt und ist durch eine Feder nach außen vorgespannt. Dadurch wird die Dichtwirkung an der Kopplungsstelle zwischen Kühlmittelrohr und Gewindebohrer verbessert.

Die DE 10 2005 050 754 B4 offenbart eine Werkzeugaufnahme zur Minimalmengenschmierung, bei der ein Kühl- und/oder Schmiermittelrohr für ein als Kühl- und/oder Schmiermittel vorgesehenes Aerosol zur Abdichtung an seiner Stirnfläche an einem im Werkzeug eingesetzten Dichtring anliegt. Hiermit wird eine sehr gute Abdichtung erreicht.

Der vorliegenden Erfindung liegt nun die Aufgabe zugrunde, eine Werkzeugaufnahme der eingangs genannten Art so auszugestalten, dass es in einfacher Weise und effizient möglich wird, die Kopplungsstelle zwischen Leitung und Leitungsabschnitt abzudichten, so dass insbesondere ein Austritt von Kühl- und/oder Schmiermittel an der Kopplungsstelle zumindest weitgehend vermieden werden kann. Des weiteren soll ein entsprechendes Verfahren zum Betrieb einer Werkzeugaufnahme vorgeschlagen werden.

Die Lösung dieser Aufgabe durch die Erfindung ist gemäß Patentanspruch 1 dadurch gekennzeichnet, dass eine Gaszuführleitung, insbesondere eine Luftzuführleitung, vorhanden ist, die ein unter Druck stehendes Druckgas, insbesondere Druckluft, von einer Druckgasquelle, insbesondere Druckluftquelle, so in den Bereich der Kopplungsstelle leitet, dass das Druckgas, insbesondere die Druckluft, dort auf die Außenflächen (oder: Außenumfangsflächen) der Leitung der Werkzeugaufnahme und des Leitungsabschnitts des Werkzeugs wirkt und einem Austritt von Kühl- und/oder Schmiermittel an der Kopplungsstelle entgegenwirkt.

Dies Luft wirkt als Sperrluft von außen auf die Leitung und auf den Leitungsabschnitt an der Kopplungsstelle, so dass auf diese Weise sichergestellt wird, dass kein Kühl- und/oder Schmiermittel aus der Leitung bzw. aus dem Leitungsabschnitt austritt.

Der Kühl- und/oder Schmierstoff ist insbesondere ein Ölnebel oder ein Öl-Aerosol, wie es insbesondere bei Minimalmengenschmierung verwendet wird.

Vorteilhafte Ausgestaltungen und Weiterbildungen ergeben sich aus den abhängigen Patentansprüchen.

Das gemäß Patentanspruch 12 vorgeschlagene Verfahren zum Betreiben einer solchen Werkzeugaufnahme sieht erfindungsgemäß vor, dass zumindest zeitweise über die Leitung ein Kühl- und/oder Schmierstoff von der Kühl- und/oder Schmierstoffquelle zum Werkzeug geleitet wird, wobei zumindest während der Zuführung des Kühl- und/oder Schmierstoffs über die Luftzuführleitung unter Druck stehende Luft eingeleitet und der Kopplungsstelle zwischen der Leitung und dem Leitungsabschnitt aufgegeben wird.

Dabei ist bevorzugt vorgesehen, dass der Druck der der Kopplungsstelle aufgegebenen Luft an der Kopplungsstelle mindestens gleich groß ist wie der Druck im Inneren der Leitung bzw. des Leitungsabschnitts im Bereich der Kopplungsstelle, um eine optimale Abdichtung zu erreichen.

Mit dieser Ausgestaltung bzw. mit dieser Vorgehensweise wird erreicht, dass sich ein Sperrluft-Schild um den Außenumfang der Leitung und des Leitungsabschnitts im Bereich der Kopplungsstelle aufbaut, so dass es nicht möglich ist, dass an der Kopplungsstelle Ölnebel entweicht bzw. Öl aus dem Ölnebel austritt und zu Verunreinigungen führt bzw. dazu, dass der Ölnebel Öl verliert.

Demgemäß wird in einfacher Weise eine Abdichtung der Kopplungsstelle erreicht, die effizient arbeitet und einfach zu realisieren ist.

In der Zeichnung sind Ausführungsbeispiele der Erfindung dargestellt. Es zeigen:
- FIG 1: in einer Schnittdarstellung eine Werkzeugaufnahme mit Werkzeug gemäß einer ersten Ausführungsform der Erfindung,
- FIG 2: die Einzelheit "W" gemäß FIG 1,
- FIG 3: die Einzelheit "X" gemäß FIG 1,
- FIG 4: ein Hülsenelement mit Kühlmittelrohr im Schnitt IV-IV gemäß FIG 1 und
- FIG 5: eine alternative Ausführung eines Hülsenelementes mit Kühlmittelrohr in einem Schnitt.

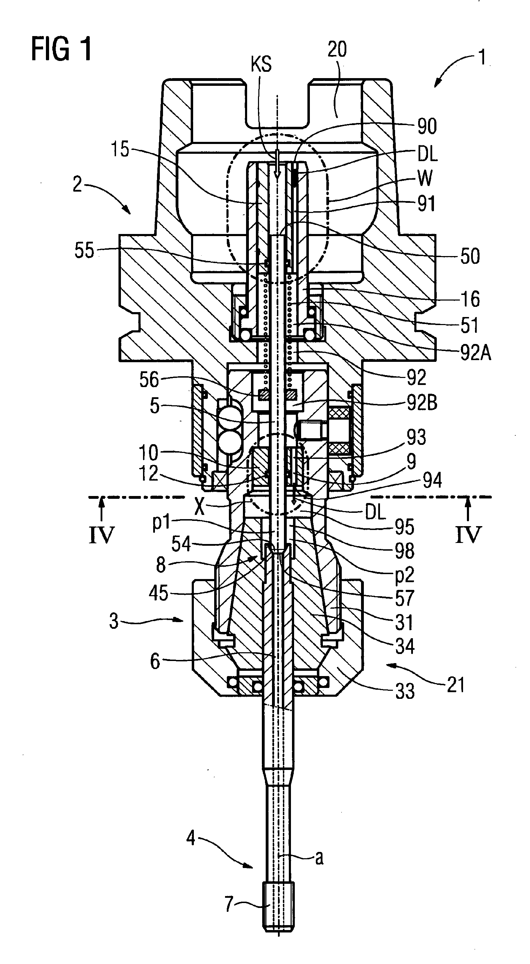

In den FIG 1 bis 4 ist ein erstes Ausführungsbeispiel der erfindungsgemäß vorgeschlagenen Werkzeugaufnahme 1 dargestellt. Die Werkzeugaufnahme 1 wird an einer Spindelseite 20 an eine nicht dargestellte Antriebsspindel nicht dargestellten Werkzeugmaschine gekoppelt und nimmt an einer Werkzeugseite 21 ein Werkzeug 4 auf und koppelt dieses in einer Drehkopplung an die Antriebsspindel der Werkzeugmaschine, so dass das Werkzeug 4 von der Antriebsspindel über die Werkzeugaufnahme 1 um eine Drehachse a drehangetrieben werden kann oder ist. Das Werkzeug 4 ist vorzugsweise ein Gewindebohrer und die Werkzeugaufnahme 1 ein Gewindeschneidfutter, jedoch kann das Werkzeug 4 auch ein Gewindefurcher, Gewindefräser oder auch ein anderes, insbesondere spanend oder spanlos arbeitendes, rotierendes Werkzeug sein.

In der dargestellten Ausführungsform ist die Werkzeugaufnahme 1 im Wesentlichen zweiteilig ausgebildet und umfasst ein erstes Aufnahmeteil 2, das die Spindelseite 20 aufweist und zum Ankoppeln an die Antriebsspindel der Werkzeugmaschine ausgebildet ist, und weiterhin ein zweites Aufnahmeteil 3, das die Werkzeugseite 21 aufweist und zur Aufnahme des Werkzeugs 4 ausgebildet ist sowie an das erste Aufnahmeteil 2 drehgekoppelt ist und in an sich bekannter Weise einen gewissen axialen Längenausgleich mittels einer begrenzten axialen Beweglichkeit zum ersten Aufnahmeteil 2 bei gleichzeitiger drehfester Kopplung und mittels einer zum Werkzeug 4 hin wirkenden Längenausgleichsfeder 51 ermöglicht. Es ist aber auch eine einteilige Ausführung der Werkzeugaufnahme 1 und/oder eine Ausführung ohne Längenausgleich möglich.

Das Werkzeug 4 ist im dargestellten Ausführungsbeispiel in einer Spannzange 34 festgespannt, die von außen durch eine Spannhülse oder Einsetzhülse 31 mittels einer auf die Einsetzhülse 31 aufgeschraubten Spannmutter 33 in an sich bekannter Weise über beispielsweise konische Spannflächen festgespannt oder zusammengedrückt wird. Die Einsetzhülse 31 ist wiederum in an sich bekannter Weise mit dem ersten Aufnahmeteil 2 drehfest gekoppelt. Einsetzhülse 31, Spannzange 34 und Spannmutter 33 gehören zum zweiten Aufnahmeteil 3.

Nachdem das Werkzeug 4 in die Werkzeugaufnahme 1 montiert wurde und die Werkzeugaufnahme 1 ihrerseits in die Werkzeugmaschine eingesetzt wurde, dreht die nicht dargestellte Spindel der Werkzeugmaschine die Werkzeugaufnahme 1 samt Werkzeug 4 um die Drehachse a. Durch entsprechenden zur Drehachse a axialen Vorschub wird die Bearbeitungsstelle 7 des Werkzeugs 4 in Kontakt mit dem zu bearbeitenden Werkstück gebracht, z.B. um ein Gewinde einzuschneiden.

Wichtig ist, dass die Bearbeitungsstelle 7 des Werkzeugs 4 hinreichend mit Kühl- und/oder Schmiermittel (oder: Kühl- und/oder Schmierstoff) KS versorgt wird, wozu eine Kühl- und/oder Schmiermittel-Versorgungsleitung vorhanden ist, die eine Leitung 5, die sich koaxial zur Drehachse a in der Werkzeugaufnahme 1 erstreckt, und einen strömungstechnisch in Reihe zur Leitung 5 geschalteten Leitungsabschnitt 6 im Werkzeug 4 umfasst.

Die Leitung 5 der Werkzeugaufnahme 1 und der Leitungsabschnitt 6 des Werkzeugs 4 sind an einer Kopplungsstelle 8 miteinander strömungstechnisch verbunden und die Austrittsöffnung 57 der Leitung 5 mündet in den Leitungsabschnitt 6 oder ist mit diesem verbunden. Insbesondere stoßen die Leitung 5 der Werkzeugaufnahme 1 und der Leitungsabschnitt 6 des Werkzeugs 4 an der Kopplungsstelle 8 stirnseitig aneinander, d.h. die Stirnseite 54 der Leitung 5 einerseits und die Stirnseite 45 des Werkzeugs 4 um den Leitungsabschnitt 6 andererseits liegen flächig, beispielsweise über komplementäre Anlageflächen, die beispielsweise konisch ausgebildet sein können, aneinander an, so dass eine gewisse Abdichtung erzielt ist.

Über die Leitung 5 und im Anschluss über den Leitungsabschnitt 6 gelangt mithin Kühl- und/oder Schmierstoff KS, das in die Leitung 5 an ihrer Eintrittsöffnung 50 im oberen Bereich unter Druck eingegeben wird, zur Bearbeitungsstelle 7.

Die Leitung 5 ist insbesondere als längliches Rohr (Kühlmittelrohr) ausgebildet und verläuft ausgehend vom Werkzeug 4 durch den Innenraum der Einsetzhülse 31 und den Innenraum des ersten Aufnahmeteils 2 bis zu einer Führungshülse 15, in der es über eine Dichtung 55 abgedichtet axial verschiebbar ist und die Eintrittsöffnung 50 für das Kühl- und/oder Schmiermittel KS aufweist. An einem Federlagerring 56 an der Außenseite der Leitung 5 liegt die Längenausgleichsfeder 51 auf.

An der Austrittsseite taucht das Ende der Leitung 5 in eine Ausnehmung in der Spannzange 34 ein und liegt dort mit der Stirnfläche 54 auf der Stirnfläche 45 des Werkzeugs 4 auf. Die Ausnehmung in der Spannzange 34 bildet einen Umgebungsraum 98 für die Kopplungsstelle 8. Der Umgebungsraum 98 ist durch das eingespannte Werkzeug 4 druckdicht abgedichtet und öffnet sich in einen an den Umgebungsraum 98 angrenzenden oder oberhalb der Spannzange 34 befindlichen und im Durchmesser größeren Innenraum 95 der Einsetzhülse 31. Der Innenraum 95 ist nach oben oder an der vom Umgebungsraum 98 abgewandten Seite durch ein die Leitung 5 umgebendes Hülsenelement 10 abgeschlossen. Das Hülsenelement 10 weist eine zentrale axial zur Drehachse a verlaufende Durchführung (oder: Bohrung) 11 für die Leitung 5 auf und ist über eine Dichtung 12 ringsum an der Leitung 5 abgedichtet.

Im Anschluss an das oder oberhalb des Hülsenelements 10 verläuft die Leitung 5 innerhalb eines weiteren Hohlraums der Einsetzhülse 31, der den zweiten Teilkanal 92B eines zweiten Kanals 92 bildet und den Federlagerring 56 der Leitung 5 aufnimmt. Ein sich nach oben oder an den zweiten Teilkanal 92B anschließender erster Teilkanal 92A des zweiten Kanals 92 verläuft um die Leitung 5 innerhalb des zweiten Aufnahmeteils 2 und der Haltehülse 16, in der die Führungshülse 15 für die Leitung 5 angeordnet ist und nimmt die Längenausgleichsfeder 51 zum großen Teil auf.

Als Kühl- und/oder Schmierstoff KS wird nun insbesondere Ölnebel oder ein Öl-Aerosol eingesetzt, d. h. mit Luft versetztes Öl, wobei dieses in Form winziger Tröpfchen in der Luft vorliegt.

Vor allem aufgrund der Entmischung des Öls und der Luft innerhalb der Leitung 5 und insbesondere an der Kopplungsstelle 8 zum Leitungsabschnitt 6 kann trotz der aneinanderliegenden Stirnflächen 54 und 45 der Kühl- und/oder Schmierstoff KS an der Kopplungsstelle 8 austreten und sich Öl in dem Umgebungsraum 98 sowie auch in dem Innenraum 95 ansammeln und auch aus der Werkzeugaufnahme 1 austreten.

Damit an der Kopplungsstelle 8 nichts von dem Ölnebel des Kühl-und/oder Schmiermittels KS austreten kann, wird der Umgebungsraum 98 um die Kopplungsstelle 8 gemäß der Erfindung mit Druckluft DL beaufschlagt, die von außen auf die Außenflächen der Leitung 5 einerseits und des Leitungsabschnittes 6 des Werkzeugs 4 andererseits einwirkt. Die Druckluft DL verhindert einen Austritt des Kühl- und/oder Schmiermittels KS an der Kopplungsstelle 8. Der Druck p2 der Druckluft DL wird dazu vorzugsweise mindestens so groß eingestellt wie der im Inneren der Leitung 5 und des Leitungsabschnitts 6 an der Kopplungsstelle 8 herrschende Druck p1 des Kühl- und/oder Schmiermittels KS.

Der Druck p1 des Kühl- und/oder Schmiermittels KS beträgt typischerweise zwischen 4 bar und 6 bar, so dass der Druck p2 der Druckluft DL entsprechend hoch oder höher einzustellen ist. Es genügt aber auch schon ein in etwa gleicher Druck p2 = p1, so dass bevorzugt die für die Herstellung des Ölnebels des Kühl- und/oder Schmiermittels KS verwendete Druckluftquelle auch für die Abdichtung an der Kopplungsstelle 8 verwendet werden kann. Die Druckluft DL legt sich quasi als Sperrluft auf den Außenumfang oder die Außenfläche von Leitung 5 und Leitungsabschnitt 6 an der Kopplungsstelle 8, so dass aus der Leitung 5 bzw. aus dem Leitungsabschnitt 6 kein Ölnebel austreten kann.

Zum Zuführen der Druckluft DL ist nun in der Werkzeugaufnahme 1 eine Druckluftzuführleitung 9 vorgesehen, die verschiedene Abschnitte oder Teilkanäle 91, 92, 93, 95 und 98 umfasst.

Die als Sperrluft vorgesehene Druckluft DL wird in den dargestellten Ausführungsbeispielen in der Druckluftzuführleitung 9 parallel zum Kühl-und/oder Schmiermittel KS und somit außerhalb der Leitung 5 nach vorne zur Kopplungsstelle 8 geführt.

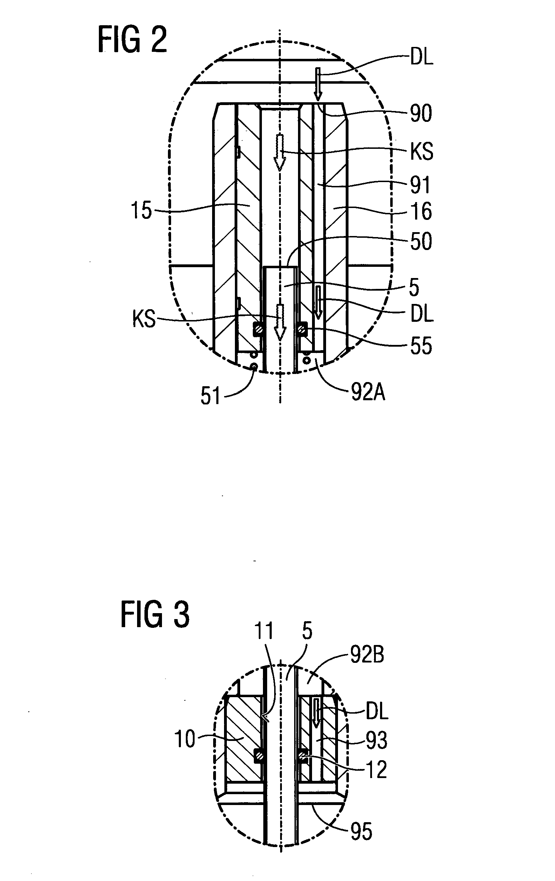

Zunächst wird, wie in FIG 1 und 2 gezeigt, die Druckluft DL von einer nicht dargestellten Druckluftquelle durch eine Eintrittsöffnung 90 in einen durch einen parallel zur Leitung 5 und zur Drehachse A, exzentrisch verlaufenden ersten Kanal 91 in oder an der Wandung der Führungshülse 15 oder zwischen Führungshülse 15 und Haltehülse 16 eingekoppelt und strömt durch diesen ersten Kanal 91 in den zweiten Kanal 92 und dann durch den zweiten Kanal 92, also erst durch den ersten Teilkanal 92A und dann durch den zweiten Teilkanal 92B, bis zum Hülsenelement 10.

In dem Hülsenelement 10 ist nun gemäß FIG 1 und 3 ein dritter Kanal 93 gebildet, der ausgehend von der an der zweiten Teilkanal 92B angrenzenden Seite in dem Hülsenelement 10 parallel zur Drehachse a und exzentrisch zur Durchführung 11 für die Leitung 5 verläuft und mit einer Austrittsöffnung 94 in den Innenraum 95 in der Einsetzhülse 31 mündet. Von dem Innenraum 95 gelangt die Druckluft DL schließlich in den Umgebungsraum 98 an der Kopplungsstelle 8.

Da der Innenraum 95 und der Umgebungsraum 98 bis auf den dritten Kanal 93, an dem die Druckluft DL mit dem Druck p2 anliegt ansonsten druckdicht verschlossen sind, herrscht im Umgebungsraum 98 und im Innenraum 95 im Wesentlichen der Druck p2 der Druckluft DL, der dem Innendruck p1 im gesamten Bereich der Kopplungsstelle 8 entgegensteht.

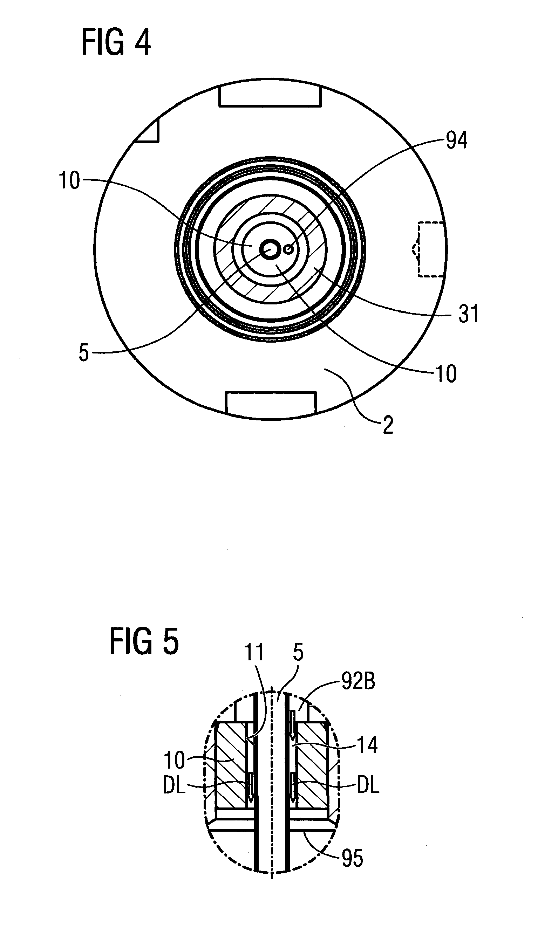

Eine zur FIG 3 alternative Ausgestaltung der Druckluftdurchführung am Hülsenelement 10 ist in FIG 4 zu sehen. Die Durchführung 11 für die Leitung 5 im Hülsenelement 10 ist nun im Durchmesser größer ausgebildet als der Außendurchmesser der Leitung 5 und nicht durch einen Dichtring 12 abgedichtet wie in FIG 3. Dadurch ist gemäß FIG 4 zwischen Hülsenelement 10 und Leitung 5 ein Ringspalt oder Luftdurchtrittsspalt 14 gebildet, der in den Innenraum 95 mündet und durch den - anstelle des dritten Kanals 93 in FIG 3 - die Druckluft DL vom zweiten Teilkanal 92B in den Innenraum 95 strömt oder strömen kann.

Die dargestellte Werkzeugaufnahme 1 ist ansonsten gemäß einer an sich bekannten Bauform ausgeführt, so dass auf weitergehende Erläuterung diesbezüglich verzichtet werden kann, zumal es im Rahmen der vorliegenden Erfindung primär um die Abdichtung der Kopplungsstelle mittels Sperrluft geht.

Neben der rein axialen Zuführung der Druckluft kann beispielsweise die Druckluft auch seitlich zur Werkzeugaufnahme 1 geführt werden.

### Bezugszeichenliste

- 1: Werkzeugaufnahme
- 2: erstes Aufnahmeteil
- 3: zweites Aufnahmeteil
- 4: Werkzeug
- 5: Leitung
- 6: Leitungsabschnitt
- 7: Bearbeitungsstelle
- 8: Kopplungsstelle
- 9: Luftzuführleitung
- 10: Hülsenelement
- 11: Bohrung
- 12: Dichtungselement (O-Ring)
- 13: Durchtrittsbohrung
- 14: Luftdurchtrittsspalt
- 15: Führungshülse
- 16: Haltehülse
- 20: Spindelseite
- 21: Werkzeugseite
- 31: Einsetzhülse
- 33: Spannmutter
- 34: Spannzange
- 50: Eintrittsöffnung
- 51: Längenausgleichsfeder
- 55: Dichtring
- 56: Federlagerring
- 57: Austrittsöffnung
- 90: Eintrittsöffnung
- 91: erster Kanal
- 92: zweiter Kanal
- 93: dritter Kanal
- 94: Austrittsöffnung
- 95: Innenraum
- 98: Umgebungsraum
- a: Drehachse
- DL: Druckluft
- KS: Kühl- und/oder Schmiermittel
- p: Druck

## Patentansprüche

1. Werkzeugaufnahme (1) zur Aufnahme eines Werkzeugs (4) und zur Drehkopplung des Werkzeugs (4) an eine Antriebsspindel einer Werkzeugmaschine,
a) wobei die Werkzeugaufnahme (1) eine Leitung (5) zum Hindurchführen eines Kühl- und/oder Schmiermittels (KS) zum Werkzeug (4) aufweist,
b) wobei das Werkzeug (4) einen Leitungsabschnitt (6) zum Führen des Kühl- und/oder Schmiermittels (KS) an eine Bearbeitungsstelle (7) aufweist und
c) wobei im montierten Zustand des Werkzeugs (4) in der Werkzeugaufnahme (1) die Leitung (5) der Werkzeugaufnahme (1) an einer Kopplungsstelle (8) den Leitungsabschnitt (6) des Werkzeugs (4) kontaktiert, so dass Kühl- und/oder Schmiermittel (KS) von der Leitung (5) der Werkzeugaufnahme (1) in den Leitungsabschnitt (6) des Werkzeugs (4) strömt oder strömen kann,
**dadurch gekennzeichnet, dass**
d) eine Gaszuführleitung, insbesondere eine Luftzuführleitung (9, 91, 92, 93, 95, 98), vorhanden ist, die ein unter Druck stehendes Druckgas, insbesondere Druckluft (DL), in den Bereich (98) der Kopplungsstelle (8) leitet derart, dass das Druckgas, insbesondere die Druckluft, an der Kopplungsstelle (8) auf die Außenflächen der Leitung (5) der Werkzeugaufnahme (1) und des Leitungsabschnitts (6) des Werkzeugs (4) wirkt und einem Austritt von Kühl- und/oder Schmiermittel (KS) an der Kopplungsstelle (8) entgegenwirkt.

2. Werkzeugaufnahme nach Anspruch 1 mit wenigstens einem der folgenden Merkmale:
a) die Werkzeugaufnahme (1) ist, insbesondere mit dem aufgenommenen Werkzeug (4) von der Antriebsspindel um eine Drehachse (a) drehangetrieben oder drehantreibbar,
b) das Werkzeug (4) ist ein Gewindeerzeugungswerkzeug, insbesondere ein Gewindebohrer, ein Gewindefurcher oder ein Gewindefräser,
c) die Werkzeugaufnahme (1) umfasst ein erstes Aufnahmeteil (2) zum Ankoppeln an die Antriebsspindel der Werkzeugmaschine und ein zweites Aufnahmeteil (3) zur Aufnahme des Werkzeugs (4), das an das erste Aufnahmeteil (2) drehgekoppelt ist, vorzugsweise mit axialem Längenausgleich zwischen erstem Aufnahmeteil (2) und zweitem Aufnahmeteil (3) und/oder mit einer zum Werkzeug (4) hin auf das zweite Aufnahmeteil (3) wirkenden Längenausgleichsfeder (51),
d) das Werkzeug (4) ist in einer Spannzange (34) festgespannt oder festspannbar, die von außen durch eine Einsetzhülse (31) mittels einer auf die Einsetzhülse (31) aufgeschraubten Spannmutter (33) zusammengedrückt oder zusammendrückbar ist.

3. Werkzeugaufnahme nach Anspruch 1 oder 2 mit wenigstens einem der folgenden Merkmale:
a) die Leitung (5) der Werkzeugaufnahme (1) und der Leitungsabschnitt (6) des Werkzeugs (4) stoßen an der Kopplungsstelle (8) stirnseitig aneinander und ihre Stirnseiten (54, 45) liegen flächig, insbesondere über komplementäre Anlageflächen, die beispielsweise konisch ausgebildet sein können, aneinander an,
b) das Kühl- und/oder Schmiermittel (KS) stammt von einer Kühl- und/oder Schmiermittelquelle und/oder die Leitung (5) ist mit einer Kühl- und/oder Schmiermittelquelle verbunden,
c) das Druckgas, insbesondere die Druckluft (DL), stammt von einer Druckgasquelle, insbesondere Druckluftquelle, und/oder die Gaszuführleitung, insbesondere Luftzuführleitung (9, 91, 92, 93, 95, 98), ist mit einer Druckgasquelle, insbesondere Druckluftquelle, verbunden,
d) als Kühl- und/oder Schmiermittel (KS) ist ein Ölnebel oder ein Öl-Aerosol vorgesehen.

4. Werkzeugaufnahme nach einem der Ansprüche 1 bis 3 mit wenigstens einem der folgenden Merkmale:
a) die Leitung (5) und der Leitungsabschnitt (6) verlaufen zumindest im Bereich der Kopplungsstelle (8) koaxial zu der Drehachse (a),
b) die Leitung (5) verläuft über ihre gesamte Länge zwischen Eintrittsöffnung (50) und Austrittsöffnung (57) koaxial zu der Drehachse (a) und/oder ist als längliches gerades Rohr ausgebildet.

5. Werkzeugaufnahme nach einem der Ansprüche 1 bis 4, bei der
a) die Leitung (5) in ihrem Endbereich mit der Eintrittsöffnung (50) in einer Führungshülse (15) axial geführt ist und vorzugsweise gegen diese über eine Dichtung (55) abgedichtet ist,
b) die Leitung (5) vorzugsweise durch den Innenraum der Einsetzhülse (31) und den Innenraum des ersten Aufnahmeteils (2) bis zur Führungshülse (15) verläuft, und
c) vorzugsweise an einem Federlagerring (56) an der Außenseite der Leitung (5) die Längenausgleichsfeder (51) aufliegt, die an dem anderen Ende an der Führungshülse (15) aufliegt,

6. Werkzeugaufnahme nach einem der Ansprüche 1 bis 5, bei der
a) ein Hülsenelement (10) vorgesehen ist, das eine, vorzugsweise axial zur Drehachse (a) verlaufende, Durchführung (11) für die Leitung (5) aufweist, wobei
b) entweder das Hülsenelement (10) an der Durchführung (11) über eine Dichtung (12) ringsum an der Leitung (5) abgedichtet ist und/oder einen durchgehenden Kanal (93) als Teil der Gaszuführleitung, insbesondere Luftzuführleitung (9, 91, 92, 93, 95, 98), aufweist, der insbesondere parallel zur Durchführung (11) und/oder Drehachse (a) durch das Hülsenelement (10) verläuft, oder
c) zwischen der Durchführung (11) des Hülsenelementes (10) und der Außenwand der Leitung (5) ein durchgehender Luftdurchtrittspalt (14) gebildet ist, der Teil der Gaszuführleitung, insbesondere Luftzuführleitung (9, 91, 92, 93, 95, 98), ist.

7. Werkzeugaufnahme nach einem der vorhergehenden Ansprüche, bei der
a) um die Kopplungsstelle (8) ein, vorzugsweise durch das eingespannte Werkzeug (4) druckfest abgedichteter, Umgebungsraum (98) gebildet ist, in den die Druckluft (DL) geleitet wird oder in dem die Gaszuführleitung, insbesondere eine Luftzuführleitung (9, 91, 92, 93, 95, 98), endet,
b) wobei der Umgebungsraum (98) insbesondere in einer Ausnehmung in der Spannzange (34) gebildet ist.

8. Werkzeugaufnahme nach einem der vorhergehenden Ansprüche, bei der
a) an den Umgebungsraum (98) ein Innenraum (95) angrenzt, insbesondere oberhalb der Spannzange (34), der vorzugsweise im Durchmesser größer ist und insbesondere ein Innenraum (95) der Einsetzhülse (31) ist, und/oder bei der
b) der Umgebungsraum (98) oder der Innenraum (95) an der von der Kopplungsstelle (8) abgewandten Seite durch das die Leitung (5) umgebende Hülsenelement (10) abgeschlossen ist, und/oder bei der
c) der im Hülsenelement (10) gebildete durchgehende Kanal (93) als Teil der Gaszuführleitung, insbesondere Luftzuführleitung (9, 91, 92, 93, 95, 98) mit einer Austrittsöffnung (94) in den Innenraum (95), insbesondere den Innenraum (95) der Einsetzhülse (31), oder direkt in den Umgebungsraum (98) an der Kopplungsstelle (8) mündet, und/oder der zwischen der Durchführung (11) des Hülsenelementes (10) und der Leitung (5) gebildete Luftdurchtrittspalt (14) in den Innenraum (95), insbesondere den Innenraum (95) der Einsetzhülse (31), oder direkt in den Umgebungsraum (98) an der Kopplungsstelle (8) mündet.

9. Werkzeugaufnahme nach Anspruch 6 oder einem der auf Anspruch 6 rückbezogenen Ansprüche, bei der im Anschluss an das Hülsenelement (10) die Leitung (5) innerhalb eines Hohlraums der Werkzeugaufnahme (1), insbesondere dem zweiten Aufnahmeteil (3) und dem ersten Aufnahmeteil (2), verläuft, welcher Hohlraum wenigstens teilweise einen Kanal (92) als Teil der Gaszuführleitung, insbesondere Luftzuführleitung (9, 91, 92, 93, 95, 98) bildet.

10. Werkzeugaufnahme nach Anspruch 5 oder einem der auf Anspruch 5 rückbezogenen Ansprüche, bei der in oder an der Wandung der Führungshülse (15) oder zwischen Führungshülse (15) und einer Haltehülse (16), vorzugsweise parallel zur Leitung (5) und zur Drehachse (a), ein Kanal (91) als Teil der Gaszuführleitung, insbesondere Luftzuführleitung (9, 91, 92, 93, 95, 98), verläuft.

11. Werkzeugaufnahme nach einem der vorhergehenden Ansprüche, bei der Druck (p2) des Druckgases (DL) an der Kopplungsstelle (8) oder im Umgebungsraum (98) gleich groß oder größer eingestellt ist als der im Inneren der Leitung (5) und/oder des Leitungsabschnitts (6) an der Kopplungsstelle (8) herrschende Druck (p1).

12. Verfahren zum Betreiben einer Werkzeugaufnahme (1) nach einem der Ansprüche 1 bis 11 in einer Werkzeugmaschine,
**dadurch gekennzeichnet, dass**
zumindest zeitweise über die Leitung (5) ein Kühl- und/oder Schmierstoff (KS) von der Kühl- und/oder Schmierstoffquelle zum Werkzeug (4) geleitet wird, wobei zumindest während der Zuführung des Kühl- und/oder Schmierstoffs (KS) über die Gaszuführleitung (9) Druckgas zugeleitet und der Kopplungsstelle (8) zwischen der Leitung (5) und dem Leitungsabschnitt (6) aufgegeben wird.

13. Verfahren nach Anspruch 12, **dadurch gekennzeichnet, dass** der Druck (p2) der der Kopplungsstelle (8) aufgegebenen Luft an der Kopplungsstelle (8) mindestens gleich groß ist wie der Druck (p1) im Inneren der Leitung (5) bzw. des Leitungsabschnitts (6) im Bereich der Kopplungsstelle (8).

## Claims

1. Tool holder (1) for holding a tool (4) and for rotational coupling of the tool (4) to a drive spindle of a machine tool,
a) wherein the tool holder (1) comprises a conduit (5) for feeding through a coolant and/or lubricant (KS) to the tool (4),
b) wherein the tool (4) comprises a conduit portion (6) for feeding the coolant and/or lubricant (KS) to a machining site (7) and
c) wherein, in the mounted state of the tool (4) in the tool holder (1), the conduit (5) of the tool holder (1) contacts the conduit portion (6) of the tool (4) at a coupling site (8) so that coolant and/or lubricant (KS) flows or can flow from the conduit (5) of the tool holder (1) into the conduit portion (6) of the tool (4),
**characterised in that**
d) a gas feed conduit, in particular an air feed conduit (9, 91, 92, 93, 95, 98) is provided which conducts a pressurised gas, in particular compressed air (DL), under pressure into the region (98) of the coupling site (8) such that the compressed gas, in particular the compressed air, acts at the coupling site (8) on the outer surfaces of the conduit (5) of the tool holder (1) and of the conduit portion (6) of the tool (4) and counteracts an emergence of coolant and/or lubricant (KS) at the coupling site (8).

2. Tool holder according to claim 1, having at least one of the following features:
a) the tool holder (1) is rotationally driven or rotationally driveable, in particular with the mounted tool (4), by the drive spindle about a rotation axis (a),
b) the tool (4) is a thread-creating tool, in particular a tap, a roll tap, or a thread milling cutter,
c) the tool holder (1) comprises a first holder portion (2) for coupling to the drive spindle of the machine tool and a second holder portion (3) for mounting the tool (4), which is rotationally coupled to the first holder portion (2), preferably with axial length adjustment between the first holder portion (2) and the second holder portion (3) and/or with a length adjustment spring (51) acting on the second holder portion (3) toward the tool (4),
d) the tool (4) is or can be firmly clamped in a collet chuck (34) which is or can be pressed together from outside by an inset sleeve (31) by means of a clamping nut (33) screwed onto the inset sleeve (31).

3. Tool holder according to claim 1 or 2, having at least one of the following features:
a) the conduit (5) of the tool holder (1) and the conduit portion (6) of the tool (4) abut one another on the end face at the coupling site (8) and the end faces (54, 45) thereof lie in planar contact against one another, particularly by means of complementary contact surfaces which can be configured, for example, conical,
b) the coolant and/or lubricant (KS) originates from a coolant and/or lubricant source and/or the conduit (5) is connected to a coolant and/or lubricant source,
c) the compressed gas, in particular the compressed air (DL) originates from a compressed gas source, in particular a compressed air source, and/or the gas feed conduit, in particular the air feed conduit (9, 91, 92, 93, 95, 98), is connected to a compressed gas source, in particular a compressed air source,
d) an oil mist or an oil aerosol is provided as the coolant and/or lubricant (KS).

4. Tool holder according to one of the claims 1 to 3, having at least one of the following features:
a) the conduit (5) and the conduit portion (6) extend coaxially to the rotation axis (a), at least in the region of the coupling site (8),
b) the conduit (5) extends over the whole length thereof between the entry opening (50) and the exit opening (57) coaxially with the rotation axis (a) and/or is configured as an elongate straight tube.

5. Tool holder according to one of the claims 1 to 4, wherein
a) the conduit (5) is axially guided in the end region thereof with the entry opening (50) in a guide sleeve (15) and is preferably sealed thereagainst by means of a seal (55),
b) the conduit (5) preferably extends through the internal space of the inset sleeve (31) and the internal space of the first holder portion (2) as far as the guide sleeve (15), and
c) preferably, the length adjustment spring (51) lies against a spring bearing ring (56) on the outside of the conduit (5), said spring lying at the other end against the guide sleeve (15).

6. Tool holder according to one of the claims 1 to 5, wherein
a) a sleeve element (10) is provided which comprises a through guide (11) for the conduit (5), preferably extending axially to the rotation axis (a), wherein
b) either the sleeve element (10) is sealed all round at the through guide (11) by means of a seal (12) on the conduit (5) and/or comprises a through channel (93) as part of the gas feed conduit, in particular the air feed conduit (9, 91, 92, 93, 95, 98) which extends through the sleeve element (10), in particular, parallel to the through guide (11) and/or the rotation axis (a), or
c) between the through guide (11) of the sleeve element (10) and the outer wall of the conduit (5), a continuous air passage gap (14) is formed which is part of the gas feed conduit, in particular the air feed conduit (9, 91, 92, 93, 95, 98).

7. Tool holder according to one of the preceding claims, wherein
a) formed around the coupling site (8), preferably sealed pressure-tight by means of the clamped tool (4), is a surrounding space (98) into which the compressed air (DL) is fed or in which the gas feed conduit, in particular an air feed conduit (9, 91, 92, 93, 95, 98), ends,
b) wherein the surrounding space (98) is formed particularly in a recess in the collet chuck (34).

8. Tool holder according to one of the preceding claims, wherein
a) an internal space (95) adjoins the surrounding space (98), in particular above the collet chuck (34) which is preferably larger in diameter and in particular is an internal space (95) of the inset sleeve (31), and/or wherein
b) the surrounding space (98) or the internal space (95) is closed at the side facing away from the coupling site (8) by means of the sleeve element (10) surrounding the conduit (5), and/or wherein
c) the channel (93) formed in the sleeve element (10) opens as part of the gas feed conduit, in particular the air feed conduit (9, 91, 92, 93, 95, 98) with an exit opening (94) into the internal space (95), in particular the internal space (95) of the inset sleeve (31), or directly into the surrounding space (98) at the coupling site (8), and/or the air passage gap (14) formed between the through guide (11) of the sleeve element (10) and the conduit (5) opens into the internal space (95), in particular the internal space (95) of the inset sleeve (31), or directly into the surrounding space (98) at the coupling site (8).

9. Tool holder according to claim 6 or one of the claims referring to claim 6, wherein following on from the sleeve element (10), the conduit (5) extends within a hollow space of the tool holder (1), in particular the second holder portion (3) and the first holder portion (2), said hollow space at least partially forming a channel (92) as part of the gas feed conduit, in particular the air feed conduit (9, 91, 92, 93, 95, 98).

10. Tool holder according to claim 5 or one of the claims referring to claim 5, wherein a channel (91) extends in or on the wall of the guide sleeve (15) or between the guide sleeve (15) and a holding sleeve (16), preferably parallel to the conduit (5) and to the rotation axis (a) as part of the gas feed conduit, in particular the air feed conduit (9, 91, 92, 93, 95, 98).

11. Tool holder according to one of the preceding claims, wherein the pressure (p2) of the compressed gas (DL) at the coupling site (8) or in the surrounding space (98) is set equal to or greater than the pressure (p1) prevailing in the interior of the conduit (5) and/or the conduit portion (6) at the coupling site (8).

12. Method for operating a tool holder (1) according to one of the claims 1 to 11, in a machine tool,
**characterised in that**
a coolant and/or lubricant (KS) is fed at least temporarily from the coolant and/or lubricant source to the tool (4) by means of the conduit (5), wherein at least during the feeding of the coolant and/or lubricant (KS), compressed gas is fed in by means of the gas feed conduit (9) and is delivered to the coupling site (8) between the conduit (5) and the conduit portion (6).

13. Method according to claim 12, **characterised in that** the pressure (p2) at the coupling site (8) of the air delivered to the coupling site (8) is at least equal to the pressure (p1) in the interior of the conduit (5) or the conduit portion (6) in the region of the coupling site (8).

## Revendications

1. Porte-outil (1) permettant la réception d'un outil (4) et un couplage rotatif de l'outil (4) sur une broche d'entraînement d'une machine-outil,
a) ledit porte-outil (1) comportant une conduite (5) pour mener un fluide de refroidissement et/ou de lubrification (KS) vers l'outil (4),
b) ledit outil (4) comportant un tronçon de conduite (6) pour guider le fluide de refroidissement et/ou de lubrification (KS) vers un point de traitement (7), et
c) ladite conduite (5) en un point de couplage (8), dans la position montée de l'outil (4) dans le porte-outil (1), étant en contact avec le tronçon de conduite (6) de l'outil (4), de telle sorte que le fluide de refroidissement et/ou de lubrification (KS) circule ou peut circuler depuis la conduite (5) du porte-outil (1) dans le tronçon de conduite (6) de l'outil (4),
**caractérisé en ce que**
d) une conduite d'admission de gaz, en particulier une conduite d'admission d'air (9, 91, 92, 93, 95, 98) est présente, laquelle guide un gaz comprimé mis sous pression, en particulier de l'air comprimé (DL), dans la zone (98) du point de couplage (8), de telle sorte que le gaz comprimé, en particulier l'air comprimé, au niveau du point de couplage (8) agit sur les surfaces extérieures de la conduite (5) du porte-outil (1) et du tronçon de conduite (6) de l'outil (4) et s'oppose à une sortie du fluide de refroidissement et/ou de lubrification (KS) au niveau du point de couplage (8).

2. Porte-outil selon la revendication 1, comportant au moins une des caractéristiques suivantes:
a) le porte-outil (1), en particulier avec l'outil (4) logé dans celui-ci, est entraîné en rotation ou peut être entraîné en rotation par la broche d'entraînement autour d'un axe de rotation (a),
b) l'outil (4) est un outil à fileter, en particulier un taraud, un outil à rainurer des filets ou une fraise à tailler des filets,
c) le porte-outil (1) comporte une première partie de logement (2) pour le couplage à la broche d'entraînement de la machine-outil et une deuxième partie de logement (3) pour recevoir l'outil (4), laquelle est couplée de manière rotative à la première partie de logement (2), de préférence avec une compensation de longueur axiale entre la première partie de logement (2) et la deuxième partie de logement (3) et/ou avec un ressort de compensation de longueur (51) agissant sur la deuxième partie de logement (3) vers l'outil (4),
d) l'outil (4) est bloqué ou peut être bloqué dans une pince de serrage (34) qui est serrée ou peut être serrée de l'extérieur à travers une gaine de montage (31) au moyen d'un écrou de serrage (33) vissé sur la gaine de montage (31).

3. Porte-outil selon la revendication 1 ou 2, comportant au moins une des caractéristiques suivantes:
a) la conduite (5) du porte-outil (1) et le tronçon de conduite (6) de l'outil (4) se touchent l'une et l'autre frontalement au niveau du point de couplage (8) et leurs faces frontales (54, 45) sont aboutées sur toute la surface, en particulier par l'intermédiaire de surfaces d'appui complémentaires, qui peuvent avoir une forme conique, par exemple,
b) le fluide de refroidissement et/ou de lubrification (KS) est issu d'une source de fluide de refroidissement et/ou de lubrification et/ou la conduite (5) est reliée à une source de fluide de refroidissement et/ou de lubrification,
c) le gaz comprimé, en particulier l'air comprimé (DL), est issu d'une source de gaz comprimé, en particulier une source d'air comprimé, et/ou la conduite d'admission de gaz, en particulier la conduite d'admission d'air (9, 91, 92, 93, 95, 98) est reliée à une source de gaz comprimé, en particulier une source d'air comprimé,
d) il est prévu un brouillard d'huile ou un aérosol d'huile pour le fluide de refroidissement et/ou de lubrification (KS).

4. Porte-outil selon l'une quelconque des revendications 1 à 3, comportant au moins une des caractéristiques suivantes:
a) la conduite (5) et le tronçon de conduite (6) s'étendent, au moins dans la zone du point de couplage (8), coaxialement à l'axe de rotation (a),
b) la conduite (5) s'étend sur toute sa longueur entre l'ouverture d'entrée (50) et l'ouverture de sortie (57) coaxialement à l'axe de rotation (a) et/ou est réalisée sous la forme d'un tube droit allongé.

5. Porte-outil selon l'une quelconque des revendications 1 à 4, dans lequel
a) la conduite (5), dans sa zone d'extrémité avec l'ouverture d'entrée (50), est guidée axialement dans une gaine de guidage (15) et, de préférence, est rendue étanche à celle-ci par un joint d'étanchéité (55),
b) la conduite (5) s'étend de préférence à travers l'espace intérieur de la gaine de montage (31) et le volume intérieur de la première partie de logement (2) jusqu'à la gaine de guidage (15), et
c) de préférence, sur une bague de palier à ressort (56), sur la face extérieure de la conduite (5), est appliqué le ressort de compensation de longueur (51) qui est appliqué sur la gaine de guidage (15) au niveau de l'autre extrémité.

6. Porte-outil selon l'une quelconque des revendications 1 à 5, dans lequel
a) il est prévu un élément formant gaine (10), qui comporte un passage (11) pour la conduite (5), lequel s'étend de préférence axialement à l'axe de rotation (a),
b) l'élément formant gaine (10) étant rendu étanche au niveau du passage (11) par un joint d'étanchéité (12) tout autour de la conduite (5) et/ou comportant un canal (93) continu formant une partie de la conduite d'admission de gaz, en particulier de la conduite d'admission d'air (9, 91, 92, 93, 95, 98), qui s'étend en particulier parallèlement au passage (11) et/ou à l'axe de rotation (a) à travers l'élément formant gaine (10), ou
c) entre le passage (11) de l'élément formant gaine (10) et la paroi extérieure de la conduite (5) est formée une fente de passage d'air (14) continue, qui est une partie de la conduite d'admission de gaz, en particulier de la conduite d'admission d'air (9, 91, 92, 93, 95, 98).

7. Porte-outil selon l'une quelconque des revendications précédentes, dans lequel
a) autour du point de couplage (8) est formé un espace enveloppant (98), qui est rendu étanche de manière résistante à la pression par l'outil (4) bloqué et dans lequel est guidé l'air comprimé (DL) ou dans lequel se termine la conduite d'admission de gaz, en particulier la conduite d'admission d'air (9, 91, 92, 93, 95, 98),
b) l'espace enveloppant (98) étant formé en particulier dans un évidement dans la pince de serrage (34).

8. Porte-outil selon l'une quelconque des revendications précédentes, dans lequel
a) un espace intérieur (95), de préférence avec un diamètre plus grand, est adjacent à l'espace enveloppant (98), en particulier au-dessus de la pince de serrage (34), et est en particulier un espace intérieur (95) de la gaine de montage (31), et/ou dans lequel
b) l'espace enveloppant (98) ou l'espace intérieur (95), sur le côté détourné du point de couplage (8), est fermé par l'élément formant gaine (10) entourant la conduite (5), et/ou dans lequel
c) le canal (93) continu formé dans l'élément formant gaine (10), en tant que partie de la conduite d'admission de gaz, en particulier de la conduite d'admission d'air (9, 91, 92, 93, 95, 98), débouche avec une ouverture de sortie (94) dans l'espace intérieur (95), en particulier dans l'espace intérieur (95) de la gaine de montage (31), ou directement dans l'espace enveloppant (98) au niveau du point de couplage (8), et/ou la fente de passage d'air (14), formée entre le passage (11) de l'élément formant gaine (10) et la conduite (5), débouche dans l'espace intérieur (95), en particulier dans l'espace intérieur (95) de la gaine de montage (31), ou directement dans l'espace enveloppant (98) au niveau du point de couplage (8).

9. Porte-outil selon la revendication 6 ou l'une des revendications se référant à la revendication 6, dans lequel, dans le prolongement de l'élément formant gaine (10), la conduite (5) s'étend à l'intérieur de la cavité du porte-outil (1), en particulier dans la deuxième partie de logement (3) et la première partie de logement (2), laquelle cavité forme au moins en partie un canal (92) formant une partie de la conduite d'admission de gaz, en particulier de la conduite d'admission d'air (9, 91, 92, 93, 95, 98).

10. Porte-outil selon la revendication 5 ou l'une des revendications se référant à la revendication 5, dans lequel dans ou sur la paroi de la gaine de guidage (15) ou entre la gaine de guidage (15) et une gaine de maintien (16), s'étend, de préférence parallèlement à la conduite (5) et à l'axe de rotation (a), un canal (91) formant une partie de la conduite d'admission de gaz, en particulier de la conduite d'admission d'air (9, 91, 92, 93, 95, 98).

11. Porte-outil selon l'une quelconque des revendications précédentes, dans lequel la pression (p2) du gaz comprimé (DL) au niveau du point de couplage (8) ou dans l'espace enveloppant (98) est réglée avec la même valeur ou à une valeur supérieure à la pression (p1) qui règne à l'intérieur de la conduite (5) et/ou du tronçon de conduite (6) au niveau du point de couplage (8).

12. Procédé permettant d'utiliser le porte-outil (1) selon l'une des revendications 1 à 11 dans une machine-outil,
**caractérisé en ce que**
au moins de temps en temps un fluide de refroidissement et/ou de lubrification (KS) issu de la source de fluide de refroidissement et/ou de lubrification est guidé par l'intermédiaire de la conduite (5) vers l'outil (4), au moins pendant l'acheminement du fluide de refroidissement et/ou de lubrification (KS) un gaz comprimé étant acheminé par l'intermédiaire de la conduite d'admission de gaz (9) et étant introduit dans le point de couplage (8) entre la conduite (5) et le tronçon de conduite (6).

13. Procédé selon la revendication 12, **caractérisé en ce que** la pression (p2) de l'air introduit dans le point de couplage (8) possède, au niveau du point de couplage (8), au moins la même valeur ou une valeur supérieure à la pression (p1) à l'intérieur de la conduite (5) ou du tronçon de conduite (6) dans la zone du point de couplage (8).
